# EUROPEAN PATENT APPLICATION

(11) **EP 4 141 776 A1**
(43) Date of publication of application: **01.03.2023**
(21) Application number: 21792475.2
(22) Date of filing: 02.04.2021
(51) Int. Cl.: G06Q 30/06, G06Q 30/02

(54) **MERCHANDISE TRADING SYSTEM, METHOD THEREFOR AND RECORDING MEDIUM FOR STORING SAME**

(30) Priority: 20.04.2020 KR 20200047632; 29.03.2021 KR 20210040331
(71) Applicant: Park, Chan Woo, Goyang-si, Gyeonggi-do 10467 (KR)
(72) Inventor: Park, Chan Woo, Goyang-si, Gyeonggi-do 10467 (KR)
(74) Representative: Ter Meer Steinmeister & Partner
(86) International application number: PCT/KR2021/004113
(87) International publication number: WO 2021/215694

(57) **Abstract**

A merchandise trading method according to one aspect of the present invention comprises the steps of: predicting a secondhand price at the time of a return for the merchandise a buyer wants to purchase, calculating a virtual asset corresponding to the predicted secondhand price, and, when a purchase is determined by the buyer, concluding a return agreement that includes the time of return and the calculated virtual asset and processing trading of the merchandise; allowing the buyer to determine whether to return the purchased merchandise at the time of return according to the return agreement; and, when returning of the merchandise is determined at the time of return, paying the virtual asset included in the return agreement to the buyer.

## Description

### [Technical Field]

The present invention relates to a commodity transaction system, a method therefor, and a recording medium for storing the same.

### [Background Art]

With recent development of information and communication technology, Internet connection has become possible through various devices, such as smartphones, smart pads, and smart televisions (TVs), and users may purchase a commodity anytime, anywhere. As such, restrictions on time and place disappear, there is rapidly increasing demand for online commodity transactions.

In addition, along with development of the Internet, various types of virtual assets, which are not in the form of cash, are widely being circulated. Virtual assets may also be used for online commodity transactions. However, the cash value per unit of virtual assets may change, and in this case, losses may occur to the buyer due to uncertainty due to the change in the value of virtual assets. For this reason, virtual assets have limitations in the use for commodity transactions.

### [Disclosure]

### [Technical Problem]

Therefore, the present invention is designed to solve the above problems and is for providing a commodity transaction system that is capable of transacting a commodity having a return condition using a virtual asset, a method therefor, and a recording medium for storing the same.

### [Technical Solution]

To solve the above problems, the present invention may include the following configurations.

A method for transacting a commodity includes: predicting a second-hand price at a time of return for a commodity desired to be purchased by a buyer, calculating a virtual asset corresponding to the predicted second-hand price, and when a purchase is determined by the buyer, generating a return agreement including the time of return and the calculated virtual asset, and processing a transaction for the commodity; allowing the buyer to determine whether to return the purchased commodity at the time of return according to the return agreement; and when it is determined to return the commodity at the time of return is determined, paying the virtual asset included in the return agreement to the buyer.

A commodity transaction system includes: a transaction processing unit configured to, when a purchase of a commodity having a return condition is requested by a terminal of a buyer, process a transaction for the commodity; a virtual asset issuing unit configured to predict a second-hand price of the commodity at a time of return, calculate a virtual asset corresponding to the predicted second-hand price, and issue the calculated virtual asset; and a return agreement processing unit configured to, when the commodity is determined to be returned according to the return condition, pay the buyer the issued virtual asset.

A method for transacting a commodity includes: predicting a residual value of a commodity desired to be leased or rented by a buyer at a time of return of the commodity, calculating a virtual asset corresponding to the predicted residual value, and when a lease or rental is determined by the buyer, making a return agreement including the time of return and the calculated virtual asset, and processing a transaction for the commodity; allowing the buyer to determine whether to return the leased or rented commodity at the time of return according to the return agreement; when it is determined to return the commodity at the time of return, determining whether to pay the virtual asset included in the return agreement; and when it is determined to pay the virtual asset, paying the virtual asset to the buyer.

### [Advantageous Effects]

According to the present invention, the commodity transaction system, the method therefor, and the recording medium for storing the same may have the following effects.

Because the present invention is implemented to calculate a virtual asset to be paid to the buyer at a time of a return based on a cash value per unit of a virtual asset at a time of a purchase, and allow the buyer to select one of a return, a non-return, and a renewal agreement of the commodity in consideration of a change in the virtual asset, the buyer can be prevented from being exposed to the uncertainty caused by the change in the value of the virtual asset while maximizing the buyer's profit.

In addition to the effects described above, other features and advantages of the present specification will be described below or will become apparent to those ordinary skill in the art by the descriptions and specification.

### [Description of Drawings]

FIG. 1 is a view for describing a commodity transaction system according to an embodiment of the present invention.
FIG. 2 is a block diagram schematically illustrating a configuration of a transaction server shown in FIG. 1.
FIG. 3 is a view for describing an example of a commodity transaction through the commodity transaction system according to the embodiment of the present invention.
FIG. 4 is a flowchart showing a commodity transaction method according to an embodiment of the present invention.
FIG. 5 is a flowchart showing a commodity transaction method according to a modified embodiment of FIG. 4.
FIG. 6 is a flowchart showing a commodity transaction method according to another embodiment of the present invention.
FIG. 7 is a flowchart showing a commodity transaction method according to a modified embodiment of FIG. 6.

### [Best Mode]

While the present invention is subject to various modifications and alternative embodiments, specific embodiments thereof are shown by way of example in the accompanying drawings and will be described in detail. However, it should be understood that there is no intention to limit the present invention to the particular embodiments disclosed, but on the contrary, the present invention is to cover all modifications, equivalents, and alternatives falling within the spirit and scope of the present invention. In the description of the embodiments, the detailed description of related known functions or constructions will be omitted herein to avoid making the subject matter of the present invention unclear

It should be understood that, although the terms first, second, etc. may be used herein to describe various elements, these elements are not limited by these terms. These terms are only used to distinguish one element from another element.

The terminology used herein is for the purpose of describing particular embodiments only and is not intended to limit the invention. As used herein, the singular forms "a," "an," and "one" are intended to include the plural forms as well, unless the context clearly indicates otherwise.

It should be further understood that the terms "comprises," "comprising," "includes," and/or "including," when used herein, specify the presence of stated features, integers, steps, operations, elements, components and/or groups thereof, and do not preclude the presence or addition of one or more other features, integers, steps, operations, elements, components, and/or groups thereof.

In addition, when any one element in the present specification transmits data to another element, it should be understood that the element may directly transmit the data to the other element, or transmit the data to the other through at least one another element. Conversely, in a case where any one element in the present specification 'directly transmits' data to another element, it should be understood that the element directly transmits the data to the other element without passing through another element.

Hereinafter, the present invention will be described in detail based on embodiments of the present invention with reference to the accompanying drawings. Like reference numerals refer to like elements throughout the description of the drawings.

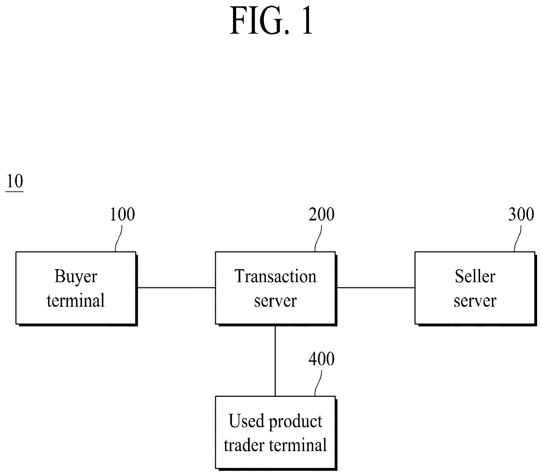

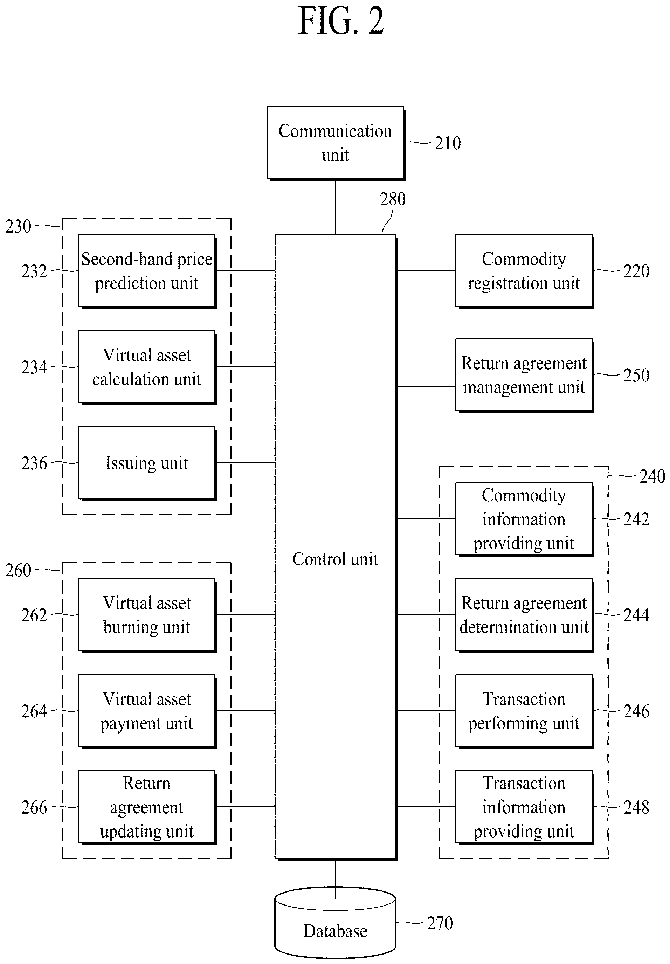

FIG. 1 is a view for describing a commodity transaction system according to an embodiment of the present invention, and FIG. 2 is a block diagram schematically illustrating a configuration of a transaction server of FIG. 1.

Referring to FIG. 1, a commodity transaction system 10 according to an embodiment of the present invention includes a buyer terminal 100 and a transaction server 200. In an embodiment, the commodity transaction system 10 may further include at least one of a seller terminal 300 and a used product trader terminal 400.

The buyer terminal 100 is connected to the transaction server 200 through a network. Here, the network is a wired network, such as a local area network (LAN), a wide area network (WAN), or a value-added network (VAN), or all types of wireless networks, such as a mobile radio communication network, a satellite communication network, Bluetooth, wireless broadband (WiBro) Internet, high speed downlink packet access (HSDPA), and the like.

The buyer terminal 100 is a device that is connected to the transaction server 200 to perform a commodity transaction. Here, the buyer terminal 100 may be an electronic device including a display, such as a smart phone, a mobile phone, a personal digital assistant (PDA), a tablet personal computer (PC), a notebook computer, or a PC.

A buyer who desires to purchase a commodity may receive information about a plurality of commodities from the transaction server 200 through the buyer terminal 100 and perform a transaction for at least one of the plurality of commodities.

Specifically, the buyer terminal 100 may receive the information about the plurality of commodities from the transaction server 200 and display the information on the screen. In this case, the plurality of commodities is a commodity registered in the transaction server 200, and may include a commodity having a return condition.

When at least one of the plurality of commodities is selected by the buyer, the buyer terminal 100 may display detailed information about the at least one commodity selected by the buyer on the screen. The detailed information about the commodity may include commodity-related information and transaction-related information. The commodity-related information may include a commodity name, a manufacturing country, a manufacturer, a manufacturing date, manufacturing ingredients, main specifications, a commodity price, and the like. The transaction-related information may include predicted second-hand prices for each contract period and virtual assets to be paid at a time of return for each contract period in the case of a commodity having a return condition.

The buyer terminal 100 may select a contract period including a time of return according to an input of the buyer. The buyer terminal 100 may transmit a purchase request for a specific commodity together with the selected contract period to the transaction server 200. The buyer terminal 100 may transmit buyer information and payment information to the transaction server 200, and receive a transaction processing result from the transaction server 200.

Meanwhile, a buyer who has purchased a specific commodity may perform a return procedure for the specific commodity through the buyer terminal 100. Specifically, when the contract period for the specific commodity elapses, the buyer terminal 100 may transmit, to the transaction server 200, whether to return the specific commodity according to a selection of the buyer.

The buyer may return the specific commodity, or renew the contract for a period including a new time of return, or continuously use the specific commodity without returning the commodity. The buyer terminal 100 may, when the return of the specific commodity is determined by the buyer, receive a virtual asset paid from the transaction server 200.

In an embodiment, the buyer terminal 100 according to the present invention may be equipped with a commodity transaction application including components for performing commodity transactions and commodity return with the transaction server 200.

The transaction server 200 is connected to the buyer terminal 100 to process a commodity transaction. The transaction server 200 may be directly managed by a company that manufactures a commodity, and may transact a plurality of commodities manufactured by the company, but the present invention is not limited thereto.

In an embodiment, the transaction server 200 may also broker transactions for commodities sold at a plurality of stores. In this case, the transaction server 200 may be connected to a plurality of seller terminals 300 through a network. The transaction server 200 may broker a commodity transaction between a seller and a buyer.

Meanwhile, the transaction server 200 may directly trade used commodities returned by buyers, but the present invention is not limited thereto. In an embodiment, the transaction server 200 may sell the commodity returned by the buyer to a second-hand dealer. In this case, the transaction server 200 may be connected to a plurality of used commodity trader terminals 400 through a network. The transaction server 200 may sell the commodity returned by the buyer to a used product trader.

The transaction server 200, as shown in FIG. 2, may include a communication unit 210, a commodity registration unit 220, a virtual asset issuing unit 230, a transaction processing unit 240, a return agreement management unit 250, and a return agreement processing unit 260, a database 270, and a control unit 280.

The communication unit 210 communicates with the buyer terminal 100 through a network. In an embodiment, the communication unit 210 may communicate with at least one of the seller terminal 300 and the used product trader terminal 400 through a network.

The commodity registration unit 220 registers a plurality of commodities. The commodity registration unit 220, when a registration of a commodity is requested together with commodity-related information through the communication unit 210, stores the commodity-related information of the corresponding commodity in the database 270. The commodity-related information may include a commodity name, a commodity price, a manufacturing country, a manufacturer, a manufacturing date, manufacturing ingredients, main specifications, and the like.

In an embodiment, the commodity registration unit 220 may receive a commodity registration request from the seller terminal 300. The commodity registration unit 220 may match related information of the commodity requested by the seller terminal 300 to be registered and seller information and store the matched commodity-related information and seller information in the database 270.

The transaction processing unit 240, when a purchase for a specific commodity is requested from the buyer terminal 100, processes a transaction for the specific commodity. To this end, the transaction processing unit 240 may include a commodity information providing unit 242, a return agreement determination unit 244, a transaction performing unit 246, and a transaction information providing unit 248.

The commodity information providing unit 242 may receive a commodity list request from the buyer terminal 100 through the communication unit 210. The commodity information providing unit 242 may provide the buyer terminal 100 with a commodity list including at least one commodity among the plurality of commodities stored in the database 270.

In addition, when at least one commodity in the commodity list is selected by the buyer as a commodity of interest, the commodity information providing unit 242 may provide detailed information about the commodity of interest to the buyer terminal 100. The detailed information about the commodity may include commodity-related information and transaction-related information.

The commodity-related information may include a commodity name, a commodity price, a manufacturing country, a manufacturer, a manufacturing date, manufacturing ingredients, main specifications, and the like, and may be stored in the database 270. The commodity information providing unit 242 may provide commodity-related information stored in the database 270 to the buyer terminal 100.

Meanwhile, the transaction-related information may include payment information, predicted second-hand prices for each contract period for a commodity having a return condition, and virtual assets to be paid at a time of return for each contract period for a commodity having a return condition, and may be generated by the virtual asset issuing unit 230. The commodity information providing unit 242 may provide the transaction related information generated by the virtual asset issuing unit 230 to the buyer terminal 100. In an embodiment, the transaction-related information generated by the virtual asset issuing unit 230 may be stored in the database 270.

The return agreement determination unit 244 determines a contract period including a time of return, and a virtual asset to be paid to the buyer upon return. For example, the contract period may be provided in units of years, such as one year or two years, but is not limited thereto. The contract period may be provided in units of months, such as one month or six months. The time of return may be a time when a contract period elapses since the time of purchase.

The return agreement determination unit 244 may determine the contract period according to a buyer's selection. The return agreement determination unit 244 may receive the contract period selected by the buyer from the buyer terminal 100, and determine the received contract period as the contract period of the purchase. When the contract period is determined by the buyer, the return agreement determination unit 244 may determine a virtual asset corresponding to the determined contract period as a virtual asset to be paid to the buyer upon return. The virtual asset will be described in more detail with reference to the virtual asset issuing unit 230.

The transaction performing unit 246, when a purchase for a specific commodity is requested from the buyer terminal 100, concludes a return agreement having a return condition determined by the return agreement determination unit 244 and performs a transaction for the specific commodity. The transaction performing unit 246 may receive, from the buyer terminal 100, delivery information including an address to which the specific commodity is to be delivered, and payment information for an amount of money corresponding to a commodity price of the specific commodity. When payment for the specific commodity is completed by the buyer terminal 100, the transaction performing unit 246 may store transaction information in the database 270. In this case, the transaction information may include purchase commodity information, a contract period including a time of return, delivery information, payment information, and buyer information.

In an embodiment, when the transaction server 200 brokers a transaction between the buyer and the seller, the transaction information providing unit 248 may provide transaction information to the seller terminal 300 of the seller who sells a commodity purchased by the buyer. The transaction server 200 may pay the seller an amount of money corresponding to the commodity price of the specific commodity received from the buyer. In this case, the transaction server 200 may pay the seller an amount of money obtained by subtracting the brokerage fees from the amount of money paid by the buyer. The seller may deliver the commodity to the buyer based on the transaction information provided by the transaction server 200.

The virtual asset issuing unit 230 issues a virtual asset to be paid to the buyer when the buyer returns the purchased commodity at the time of return. To this end, the virtual asset issuing unit 230 includes a second-hand price prediction unit 232, a virtual asset calculation unit 234, and an issuing unit 236.

The second-hand price prediction unit 232 predicts a second-hand price for a commodity having a return condition. Specifically, when the buyer desires to purchase a commodity, the second-hand price prediction unit 232 may predict a second-hand price of the commodity through big data analysis. In this case, the second-hand price prediction unit 232 may predict the second-hand prices for each contract period. For example, it is assumed that the contract period for a vehicle may be selected from among one year, two years, three years, and four years. The second-hand price prediction unit 232 may predict the used vehicle prices for each of a time point when one year has elapsed, a time point when two years have elapsed, a time point when three years have elapsed, and a time point when four years have elapsed from the present.

The virtual asset calculation unit 234 calculates a virtual asset based on the second-hand price predicted by the second-hand price prediction unit 232. Specifically, the virtual asset calculation unit 234 calculates the virtual asset based on the predicted second-hand price and a cash value per unit of the virtual asset.

Here, the virtual asset is an asset that is traded only online without a real thing, and may include a virtual currency such as cryptocurrency. Virtual assets may be settled in a virtual space, may be listed on a virtual asset exchange and traded, or may be traded at a designated virtual asset sales office. The virtual assets may fluctuate in the cash value per unit. For example, even when the cash value of one coin is currently 100,000 won, the cash value of one coin may not be 100,000 won when two years have elapsed. When two years have elapsed, the cash value of one coin may be greater or less than 100,000 won.

The virtual asset calculation unit 234 calculates a virtual asset corresponding to the second-hand price predicted by the second-hand price prediction unit 232. In this case, the virtual asset calculation unit 234 calculates the virtual asset based on the current cash value per unit of the virtual asset. Specifically, the virtual asset calculation unit 234 may calculate the virtual asset by dividing the predicted second-hand price by the current cash value per unit of the virtual asset.

The virtual asset calculation unit 234 may calculate the virtual assets for each contract period. For example, it is assumed that the contract period for a vehicle may be selected from among one year, two years, three years, and four years. The virtual asset calculation unit 234 may predict the used vehicle prices for each of the time point when one year has elapsed, the time point when two years have passed, the time point when three years have passed, and the time point when four years have elapsed from the present, and calculate the virtual prices corresponding to the predicted used vehicle prices, respectively.

Meanwhile, the second-hand prices for each contract period predicted by the second-hand price prediction unit 232 and the virtual assets for each contract period calculated by the virtual asset calculation unit 234 may be provided to the buyer through the buyer terminal 100. The buyer may select the contract period by referring to the second-hand prices for each contract period and the virtual assets for each contract period of the commodity.

The issuing unit 236 issues the virtual asset to be paid to the buyer at the time of return in a case in which the buyer returns the commodity according to the return agreement. More specifically, when the buyer returns the commodity according to the return agreement, the transaction server 200 pays the buyer for the value of the returned used commodity as a virtual asset. To this end, the issuing unit 236 issues the virtual asset to be paid to the buyer who returns the commodity at the time of return.

The issuing unit 236 issues the virtual asset calculated based on the cash value per unit of the virtual asset at the time of purchase. In an embodiment, the issuing unit 236 may issue the virtual asset calculated by the virtual asset calculation unit 234. Specifically, when the contract period is determined according to the buyer's selection, the issuing unit 236 may issue a virtual asset corresponding to the determined contract period from among the virtual assets for each contract period calculated by the virtual asset calculation unit 234. The virtual asset calculation unit 234 may calculate the virtual asset by dividing the second-hand price predicted by the second-hand price prediction unit 232 by the current cash value per unit of the virtual asset. As a result, the issuing unit 236 issues the virtual asset calculated based on the cash value per unit of the virtual asset at the current time, that is, at the time of purchase.

The issuing unit 236 may issue the virtual asset at a time when the buyer purchases the commodity or at a time when the purchased commodity is returned according to the return agreement. As an example, the issuing unit 236 may issue a virtual asset when the buyer returns the purchased commodity according to the return agreement. Even in this case, the issuing unit 236 may issue the virtual asset calculated based on the cash value per unit of the virtual asset at the time of purchase, for example, when payment for the commodity is completed, rather than at the time of return. Meanwhile, the issuing unit 236 may not issue the virtual asset in a case in which the buyer does not return the purchased commodity according to the return agreement.

As another example, the issuing unit 236 may issue the virtual asset at a time when the buyer purchases the commodity through the buyer terminal 100, for example, at a time when payment for the commodity is completed. In this case, the issuing unit 236 may issue the virtual asset calculated based on the cash value per unit of the virtual asset at the time when the payment for the commodity is completed.

Alternatively, the issuing unit 236 may issue the virtual asset corresponding to the contract period selected by the buyer among the virtual assets for each contract period calculated by the virtual asset calculation unit 234.

The return agreement management unit 250 manages return agreements of commodities purchased by a plurality of buyers. Specifically, the return agreement management unit 250 may check the time of return of the return agreement for each of the commodities purchased by the plurality of buyers through the information stored in the database 270. When the time of return of the return agreement is included within a predetermined period from the present, the return agreement management unit 250 may request the buyer terminal 100 of the buyer who has purchased the commodity to confirm whether the commodity is to be returned.

The return agreement management unit 250 may request the buyer terminal 100 to guide the time of return of the commodity for which the return agreement is made and confirm whether the commodity is to be returned according to the return agreement. In an embodiment, the return agreement management unit 250 may provide the buyer terminal 100 with the cash value of the virtual asset to be paid at the time of return in a case in which the buyer returns the commodity according to the return agreement. In this case, the cash value of the virtual asset to be paid at the time of return may be calculated by multiplying the virtual asset calculated or issued at the time of purchase by the cash value per unit of the virtual asset at the time of return. In an embodiment, when the buyer returns the commodity according to the return agreement, the return agreement management unit 250 may provide the buyer terminal 100 with the actual second-hand price of the commodity at the time of return.

The return agreement management unit 250 may further request the buyer terminal 100 to confirm whether to renew an agreement on the commodity for which the return agreement is made and to select a renewal contract period.

The return agreement processing unit 260 processes the return agreement according to the buyer's selection when the time of return arrives according to the return agreement. The return agreement processing unit 260 determines one of return processing, non-return processing, and renewal agreement processing according to the buyer's selection and processes the selection. To this end, the return agreement processing unit 260 includes a virtual asset payment unit 264 and a return agreement updating unit 266. In an embodiment, the return agreement processing unit 260 may further include a virtual asset burning unit 262.

The return agreement processing unit 260, when a non-return request for a commodity for which a return agreement is made is received from the buyer terminal 100, performs non-return processing for the commodity. In a case in which the virtual asset has been issued by the virtual asset issuing unit 230 at the time of purchase, the virtual asset burning unit 262 may burn the virtual asset issued at the time of purchase.

The return agreement processing unit 260, when a return request for a commodity for which a return agreement is made is received from the buyer terminal 100, performs return processing for the commodity. When the return of the corresponding commodity is confirmed, the virtual asset payment unit 264 pays the virtual asset issued by the virtual asset issuing unit 230 to the buyer who has returned the commodity.

In a case in which the virtual asset has not been issued by the virtual asset issuing unit 230 at the time of purchase, the virtual asset payment unit 264 may request the virtual asset issuing unit 230 to issue a virtual asset. In this case, the virtual asset issuing unit 230 may calculate the virtual asset based on the cash value per unit of the virtual asset at the time of purchase rather than the time of return, and issue the calculated virtual asset. The virtual asset payment unit 264 may pay the buyer the virtual asset issued by the virtual asset issuing unit 230 at the time of return.

In a case in which the virtual asset has been issued by the virtual asset issuing unit 230 at the time of purchase, the virtual asset payment unit 264 may pay the virtual asset issued at the time of purchase to the buyer.

The return agreement processing unit 260, when a request for renewing an agreement on the commodity, for which a return agreement is made, is received from the buyer terminal 100, performs renewal agreement processing for the commodity. When a renewal contract period is received from the buyer terminal 100, the return agreement updating unit 266 may update the contract period of the corresponding commodity in the database 270. In an embodiment, the return agreement updating unit 266 may request the virtual asset issuing unit 230 to recalculate the virtual asset. The virtual asset issuing unit 230 may recalculate the virtual asset to be paid to the buyer at the time of return according to the renewal agreement. In this case, the virtual asset issuing unit 230 may predict a second-hand price at a changed time of return, and divide the predicted second-hand price by the cash value per unit of the virtual asset at the time of purchase to recalculate the virtual asset.

The return agreement processing unit 260 may store the return processing result in the database 270.

The database 270 stores commodity-related information, buyer information, seller information, used product trader information, transaction-related information, and the like. The commodity-related information may include a commodity name, a commodity price, a manufacturing country, a manufacturer, a manufacturing data, manufacturing ingredients, main specifications, and the like, and the transaction-related information may include predicted second-hand prices for each contract period, virtual assets to be paid at a time of return for each contract period, payment information, return agreement information, and the like, of commodities having return conditions.

The control unit 280 controls operation of the communication unit 210, the commodity registration unit 220, the virtual asset issuing unit 230, the transaction processing unit 240, the return agreement management unit 250, the return agreement processing unit 260, and the database 270.

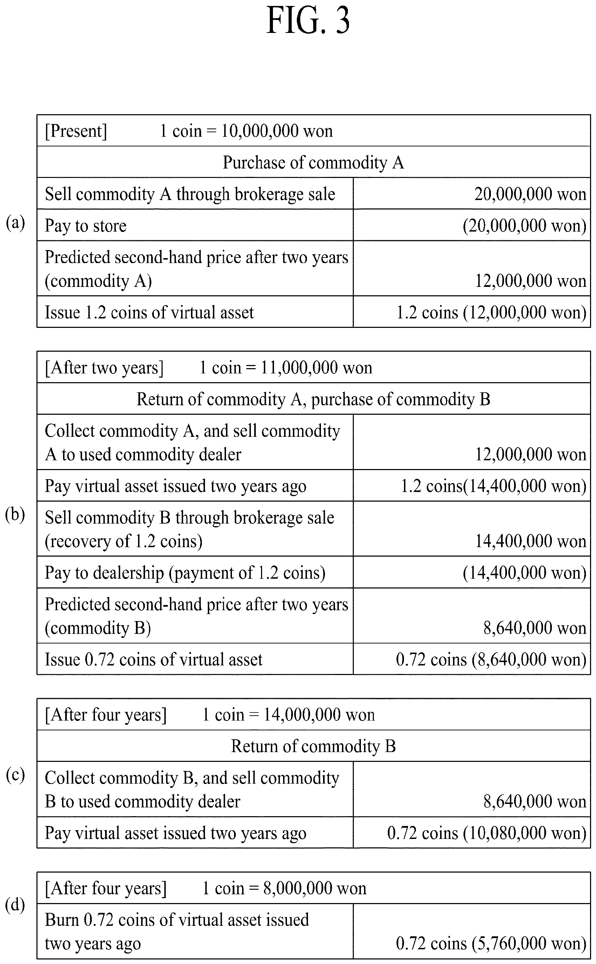

FIG. 3 is a view for describing an example of a commodity transaction through the commodity transaction system according to the embodiment of the present invention.

Referring to FIG. 3A, it is assumed that the buyer purchases commodity A at 20,000,000 won by setting the contract period to two years through the commodity transaction system 10. In this case, it is assumed that the transaction server 200 brokers a transaction between the buyer and the seller.

The transaction server 200 may, when the buyer pays 20,000,000 won corresponding to the price of the commodity A through the buyer terminal 100, provide transaction information to a store through the seller terminal 300.

In addition, the transaction server 200 may pay 20,000,000 won corresponding to the commodity price of the commodity A received from the buyer to the store. In an embodiment, the transaction server 200 may pay the store an amount of money obtained by subtracting the brokerage fees from the amount paid by the buyer. The store may deliver the commodity A to the buyer based on the transaction information provided by the transaction server 200. The transaction information may include purchase commodity information, a contract period including a time of return, delivery information, payment information, and buyer information.

Meanwhile, the transaction server 200 may predict a second-hand price of the commodity A after two years of the contract period, and calculate a virtual asset corresponding to the predicted used market price. For example, the transaction server 200 may predict the second-hand price of the commodity A is 12,000,000 won after two years. When the current cash value per unit of the virtual asset is 10,000,000 won, the transaction server 200 may calculate 1.2 coins as the virtual asset to be paid to the buyer at the time of return, that is, two years later.

The transaction server 200 may generate a return agreement including the time of return and the condition of paying 1.2 coins upon return with the buyer. In an embodiment, the transaction server 200 may issue 1.2 coins at the time of purchase. In another embodiment, the transaction server 200 may issue 1.2 coins at the time of return.

When the contract period of two years elapses, the transaction server 200 may determine one of return processing, non-return processing, and renewal agreement processing for the commodity A according to a buyer's selection and perform the determined processing.

The buyer may check the cash value per unit of the virtual asset and select one of the return processing, the non-return processing, and the renewal agreement processing for the commodity A. As shown in FIG. 3B, when the cash value per unit of the virtual asset is 12,000,000 won at the time of return, which is higher than the cash value per unit of the virtual asset of 10,000,000 won at the time of purchase, the buyer may request the return of the commodity A.

The transaction server 200 may, upon confirming the return of the commodity A, pay 1.2 coins of virtual asset to the buyer according to the return agreement. Since the cash value of 1.2 coins of virtual asset at the time of return is 14,400,000 won, which is higher than the second-hand price of 12,000,000 won of the commodity A predicted at the time of purchase, the buyer may make a profit.

The transaction server 200 may sell the returned commodity A to a second-hand dealer at a second-hand price of 12,000,000 won.

Meanwhile, the buyer may purchase a new commodity B by setting a contract period of two years with the received virtual coins. In a case in which the commodity B has a price of 14,400,000 won, when the buyer pays 1.2 coins of virtual asset, corresponding to the price of the commodity B through the buyer terminal 100, the transaction server 200 may provide transaction information to the store through the seller terminal 300.

In addition, the transaction server 200 may pay14,400,000 won corresponding to the commodity price of the commodity B received from the buyer to the store. In an embodiment, the transaction server 200 may pay an amount of money obtained by subtracting the brokerage fees from the amount of money paid by the buyer to the store. The store may deliver the commodity B to the buyer based on the transaction information provided by the transaction server 200.

Meanwhile, the transaction server 200 may predict a second-hand price of the commodity B after two years of the contract period, and calculate a virtual asset corresponding to the predicted second-hand price. For example, the transaction server 200 may predict that the used market price of the commodity B is 8,640,000 won after two years. When the current cash value per unit of the virtual asset is 12,000,000 won, the transaction server 200 may calculate 0.72 coins as the virtual asset to be paid to the buyer at the time of return, that is, two years later.

The transaction server 200 may generate a return agreement including the time of return and the condition of paying 0.72 coins upon return with the buyer. In an embodiment, the transaction server 200 may issue 0.72 coins at the time of purchase. In another embodiment, the transaction server 200 may issue 0.72 coins at the time of return.

When the contract period of two years elapses, the transaction server 200 may determine one of return processing, non-return processing, and renewal agreement processing for the commodity B according to a buyer's selection and perform the determined processing.

The buyer may check the cash value per unit of the virtual asset and select one of the return processing, the non-return processing, and the renewal agreement processing for the commodity B. As shown in FIG. 3C, when the cash value per unit of the virtual asset is 14,000,000 won at the time of return, which is higher than the cash value per unit of the virtual asset of 12,000,000 won at the time of purchase, the buyer may request return of the commodity B.

The transaction server 200 may, upon confirming the return of the commodity B, pay 0.72 coins of virtual asset to the buyer. Since the cash value of 0.72 coins of virtual asset at the time of return is 10,080,000 won, which is higher than the second-hand price of 8,640,000 won of the commodity B predicted at the time of purchase, the buyer may make a profit.

On the other hand, when the cash value per unit of the virtual asset at the time of return is 8,000,000 won, which is lower than the cash value per unit of the virtual asset of 12,000,000 at the time of purchase, the buyer may request non-return or renewal agreement of the commodity B. Since the cash value of 0.72 coins of virtual asset at the time of return is 5,760,000 won, which is lower than the second-hand price of 8,640,000 won for the commodity B predicted at the time of purchase, the buyer may keep possessing the commodity B without returning it, or defer the time of return through a renewal agreement.

The commodity transaction system 10 according to the embodiment of the present invention may calculate the virtual asset to be paid to the buyer upon return, based on the cash value per unit of the virtual asset at the time when the payment is completed or when the return agreement is made, that is, at the time of purchase. When the cash value per unit of the virtual asset at the time of return included in the return agreement rises to be higher than that at the time of purchase, the buyer may return the commodity to make a profit. On the other hand, when the cash value per unit of the virtual asset at the time of return of the return agreement is lower than that at the time of purchase, the buyer may keep possessing or renew the agreement without returning the commodity to prevent damage. The commodity transaction system 10 according to the embodiment of the present invention allows the buyer to select one of the return, the non-return, and the renewal agreement of the commodity, so that the buyer is prevented from being exposed to the uncertainty caused by the change in value while maximizing the profit of the purchase although virtual assets are used for online commodity transaction.

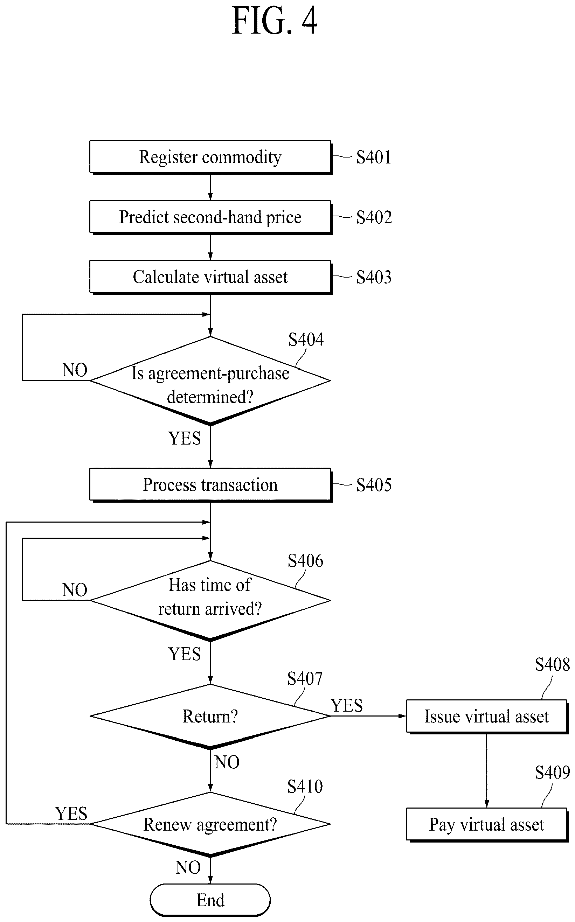

FIG. 4 is a flowchart showing a commodity transaction method according to an embodiment of the present invention. The commodity transaction method illustrated in FIG. 4 may be performed by the transaction server 200 illustrated in FIG. 1.

First, the transaction server 200 registers a plurality of commodities (S401).

The transaction server 200, when a registration of a commodity is requested together with commodity-related information, stores the commodity-related information of the corresponding commodity. In this case, the commodity-related information may include a commodity name, a commodity price, a manufacturing country, a manufacturer, a manufacturing date, manufacturing ingredients, main specifications, and the like.

In an embodiment, the transaction server 200 may receive, from the seller terminal 300, a request to register a commodity. The transaction server 200 may match related information of the commodity requested by the seller terminal 300 to be registered and seller information and store the matched commodity-related information and seller information in the database 270.

The transaction server 200 may, upon receiving a commodity list request from the buyer terminal 100, provide the buyer terminal 100 with a commodity list including at least one commodity among the plurality of stored commodities.

The transaction server 200, in response to at least one commodity in the commodity list being selected by the buyer as a commodity of interest, predicts a second-hand price of the commodity of interest and calculates a virtual asset corresponding to the predicted second-hand price (S402 and S403).

Specifically, the transaction server 200 may, when one commodity in the commodity list is selected by the buyer as a commodity of interest, provide the buyer terminal 100 with detailed information about the commodity of interest. The detailed information about the commodity may include commodity-related information and transaction-related information.

The commodity-related information may include a commodity name, a manufacturing country, a manufacturer, a manufacturing date, manufacturing ingredients, main specifications, a commodity price, and the like, and the transaction-related information may include predicted second-hand prices for each contract period and virtual assets to be paid at a time of return for each contract period with respect to a commodity having a return condition.

The transaction server 200 may predict the second-hand price for the commodity having the return condition through big data analysis. In this case, the transaction server 200 may predict the second-hand prices for each contract period.

In addition, the transaction server 200 may calculate the virtual asset based on the predicted second-hand price. Specifically, the transaction server 200 may calculate the virtual asset based on the predicted second-hand price and the cash value per unit of the virtual asset.

Here, the virtual asset is an asset that is traded only online without a real thing, and may include a virtual currency such as cryptocurrency. Virtual assets may be settled in a virtual space, may be listed on a virtual asset exchange and traded, or may be traded at a designated virtual asset sales office. The virtual assets may fluctuate in the cash value per unit.

The transaction server 200 may calculate the virtual asset by dividing the predicted second-hand price by the current cash value per unit of the virtual asset. The transaction server 200 may calculate virtual assets for each contract period.

The transaction server 200 may provide the buyer with the second-hand prices for each contract period and the virtual assets for each contract period through the buyer terminal 100. The buyer may select the contract period by referring to the second-hand prices for each contract period and the virtual assets for each contract period of the commodity.

When a contract period and a request to purchase a commodity are received from the buyer terminal 100, the transaction server 200 processes a transaction for the commodity requested by the buyer to be purchased (S404 and S405).

The transaction server 200 may receive the contract period selected by the buyer from the buyer terminal 100, and determine the received contract period as a contract period of the purchase.

The transaction server 200, when a purchase for a specific commodity is requested from the buyer terminal 100, concludes a return agreement including a time of return and a virtual asset to be paid to the buyer upon return, and process a transaction for the specific commodity. The transaction server 200 may receive, from the buyer terminal 100, delivery information including an address to which the specific commodity is to be delivered, and payment information for an amount of money corresponding to the commodity price of the specific commodity. When payment for the specific commodity is completed by the buyer terminal 100, the transaction server 200 may store transaction information in the database 270. In this case, the transaction information may include purchase commodity information, a contract period including a time of return, delivery information, payment information, and buyer information.

In an embodiment, when the transaction server 200 brokers a transaction between the buyer and the seller, the transaction server 200 may provide transaction information to the seller terminal 300 of the seller who sells a commodity purchased by the buyer. The transaction server 200 may pay the seller an amount of money corresponding to the commodity price of the specific commodity received from the buyer. In this case, the transaction server 200 may pay the seller an amount of money obtained by subtracting the brokerage fees from the amount of money paid by the buyer. The seller may deliver the commodity to the buyer based on the transaction information provided by the transaction server 200.

Meanwhile, the transaction server 200 may generate a return agreement including the time of return and the virtual asset to be paid to the buyer upon return. The transaction server 200 may calculate the virtual asset to be paid to the buyer upon return when the buyer purchases the commodity through the buyer terminal 100, for example, when payment for the commodity is completed or when the return agreement is made. The transaction server 200 may calculate the virtual asset to be paid to the buyer upon return based on the cash value per unit of the virtual asset at the time of purchasing the commodity. Specifically, the transaction server 200 may calculate the virtual asset to be paid to the buyer upon return by dividing the predicted second-hand price of the commodity at the time of return of the contract period by the cash value per unit of the virtual asset at the time of purchasing the commodity.

Alternatively, the transaction server 200 may determine a virtual asset corresponding to a contract period selected by the buyer among the virtual assets calculated for each contract period, as the virtual asset to be paid to the buyer upon return.

Next, when the time of return arrives according to the return agreement, the transaction server 200 confirms whether the commodity is to be returned to the buyer (S406 and S407).

The transaction server 200 may check the time of return of the return agreement for each of the commodities purchased by the plurality of buyers through the information stored in the database 270. When the time of return of the return agreement is included within a predetermined period from the present, the transaction server 200 may request the buyer terminal 100 of the buyer who has purchased the corresponding commodity to confirm whether the commodity is to be returned.

The transaction server 200 may request the buyer terminal 100 to guide the time of return of the commodity for which the return agreement is made and confirm whether the commodity is to be returned according to the return agreement. In an embodiment, the transaction server 200 may provide the cash value of the virtual asset to be paid at the time of return in a case in which the buyer returns the commodity according to the return agreement to the buyer terminal 100. In this case, the cash value of the virtual asset to be paid at the time of return may be calculated by multiplying the virtual asset calculated or issued at the time of purchase by the cash value per unit of the virtual asset at the time of return. In an embodiment, when the buyer returns the commodity according to the return agreement, the transaction server 200 may provide the actual second-hand price of the commodity at the time of return to the buyer terminal 100.

The transaction server 200 may further request the buyer terminal 100 to confirm whether an agreement on the commodity for which the return agreement is made is to be renewed, and to select a renewal contract period.

Next, the transaction server 200, when a return request for the commodity for which the return agreement is made is received from the buyer terminal 100, performs return processing for the commodity (S407). When the return of the commodity is confirmed, the transaction server 200 issues a virtual asset to be paid to the buyer who has returned the commodity, and pays the issued virtual asset (S408 and S409).

The transaction server 200 may issue the virtual asset when the buyer returns the purchased commodity according to the return agreement. The transaction server 200 may issue the virtual asset calculated based on the cash value per unit of the virtual asset at the time of purchase rather than the time of return, for example, when payment for the commodity is completed or when the return agreement is made. The transaction server 200 may issue the virtual asset calculated based on the predicted second-hand price of the commodity at the time of return of the contract period and the cash value per unit of the virtual asset at the time of purchase. Specifically, the transaction server 200 may issue the virtual asset corresponding to a value obtained by dividing the predicted second-hand price of the commodity at the time of return of the contract period by the cash value per unit of the virtual asset at the time of purchase.

The transaction server 200 may, when the buyer purchases a commodity, generate a return agreement, which includes a virtual asset to be paid upon return, with the buyer. In this case, the transaction server 200 may issue the virtual asset included in the return agreement made at the time of purchase, and pay the issued virtual asset to the buyer.

Alternatively, the transaction server 200, when a request for renewing an agreement on the commodity, for which a return agreement is made, is received from the buyer terminal 100, performs renewal agreement processing for the commodity (S407 and S410). The transaction server 200 may, upon receiving a renewal contract period from the buyer terminal 100, update the contract period of the corresponding commodity in the database 270.

In an embodiment, the transaction server 200 may recalculate the virtual asset based on the updated contract period. The transaction server 200 may recalculate the virtual asset to be paid to the buyer at the time of return according to the renewal agreement. In this case, the transaction server 200 may predict a second-hand price at a changed time of return, and divide the predicted second-hand price by the cash value per unit of the virtual asset at the time of purchase to recalculate the virtual asset.

Alternatively, the transaction server 200, when a non-return request for the commodity for which the return agreement is made is received from the buyer terminal 100, performs non-return processing for the commodity (S407 and S410).

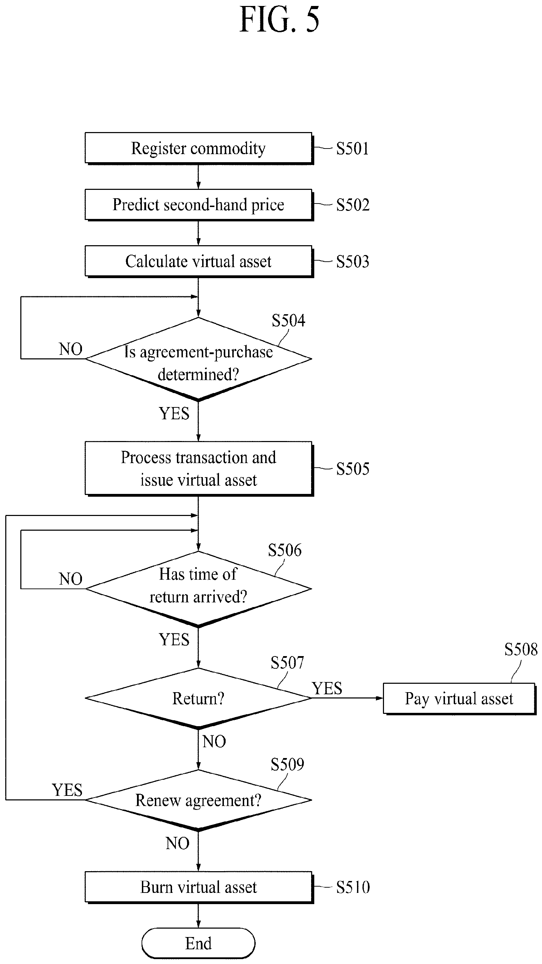

In FIG. 4, the virtual asset is illustrated as being issued when the buyer returns the commodity, but the present invention is not limited thereto. Hereinafter, a commodity transaction method according to a modified embodiment will be described in detail with reference to FIG. 5.

FIG. 5 is a flowchart showing a commodity transaction method according to a modified embodiment of FIG. 4. The commodity transaction method illustrated in FIG. 5 may be performed by the transaction server 200 illustrated in FIG. 1.

Operations S501 to S503 of FIG. 5 are substantially the same as operations S401 to S403 of FIG. 4, and thus detailed descriptions thereof will be omitted.

The transaction server 200, when a contract period and a request to purchase a commodity are received from the buyer terminal 100, processes a transaction for the commodity requested by the buyer to be purchased and issues a virtual asset (S504 and S505).

The transaction server 200 may receive the contract period selected by the buyer from the buyer terminal 100, and determine the received contract period as a contract period of the purchase. In addition, the transaction server 200 may determine a virtual asset corresponding to the determined contract period as a virtual asset to be paid to the buyer upon return.

The transaction server 200 may, upon receiving a request to purchase a specific commodity from the buyer terminal 100, generate a return agreement including a time of return and a virtual asset to be paid to the buyer upon return, and may process a transaction for the specific commodity. The transaction server 200 may receive, from the buyer terminal 100, delivery information including an address to which the specific commodity is to be delivered, and payment information for an amount of money corresponding to the commodity price of the specific commodity. When payment for the specific commodity is completed by the buyer terminal 100, the transaction server 200 may store transaction information in the database 270. In this case, the transaction information may include purchase commodity information, a contract period including a time of return, delivery information, payment information, and buyer information.

In an embodiment, when the transaction server 200 brokers a transaction between the buyer and the seller, the transaction server 200 may provide transaction information to the seller terminal 300 of the seller who sells a commodity purchased by the buyer. The transaction server 200 may pay the seller an amount of money corresponding to the commodity price of the specific commodity received from the buyer. In this case, the transaction server 200 may pay the seller an amount of money obtained by subtracting the brokerage fees from the amount paid by the buyer. The seller may deliver the commodity to the buyer based on the transaction information provided by the transaction server 200.

Meanwhile, the transaction server 200 may generate a return agreement including the time of return and the virtual asset to be paid to the buyer upon return. The transaction server 200 may calculate the virtual asset to be paid to the buyer upon return when the buyer purchases the commodity through the buyer terminal 100, for example, when payment for the commodity is completed or when the return agreement is made. The transaction server 200 may calculate the virtual asset to be paid to the buyer upon return based on the cash value per unit of the virtual asset at the time of purchasing the commodity. Specifically, the transaction server 200 may calculate the virtual asset to be paid to the buyer upon return by dividing the predicted second-hand price of the commodity at the time of return of the contract period by the cash value per unit of the virtual asset at the time of purchasing the commodity.

Alternatively, the transaction server 200 may determine a virtual asset corresponding to a contract period selected by the buyer among the virtual assets calculated for each contract period, as the virtual asset to be paid to the buyer upon return.

Then, the transaction server 200 may issue the calculated virtual asset.

Next, when the time of return arrives according to the return agreement, the transaction server 200 checks whether the buyer is to return the commodity (S506 and S507).

The transaction server 200 may check the time of return of the return agreement for each of the commodities purchased by the plurality of buyers through the information stored in the database 270. When the time of return of the return agreement is included within a predetermined period from the present, the transaction server 200 may request the buyer terminal 100 of the buyer who has purchased the corresponding commodity to confirm whether the commodity is to be returned.

The transaction server 200 may request the buyer terminal 100 to guide the time of return of the commodity for which the return agreement is made and confirm whether the commodity is to be returned according to the return agreement. In an embodiment, the transaction server 200 may provide the buyer terminal 100 with the cash value of the virtual asset to be paid at the time of return in a case in which the buyer returns the commodity according to the return agreement. In this case, the cash value of the virtual asset to be paid at the time of return may be calculated by multiplying the virtual asset calculated or issued at the time of purchase by the cash value per unit of the virtual asset at the time of return. In an embodiment, when the buyer returns the commodity according to the return agreement, the transaction server 200 may provide the buyer terminal 100 with the actual second-hand price of the commodity at the time of return.

The transaction server 200 may further request the buyer terminal 100 to confirm whether an agreement is to be renewed for the commodity for which the return agreement is made, and to select a renewal contract period.

Next, the transaction server 200, when a return request for the commodity for which the return agreement is made is received from the buyer terminal 100, performs return processing for the commodity (S507). When the return of the commodity is confirmed, the transaction server 200 pays the virtual asset issued at the time of purchase to the buyer who has returned the commodity (S508).

Alternatively, the transaction server 200, when a request for renewing an agreement for the commodity, for which a return agreement is made, is received from the buyer terminal 100, performs renewal agreement processing for the commodity (S507 and S509). The transaction server 200, upon receiving a renewal contract period from the buyer terminal 100, may update the contract period of the corresponding commodity in the database 270.

In an embodiment, the transaction server 200 may recalculate the virtual asset based on the updated contract period. The transaction server 200 may recalculate the virtual asset to be paid to the buyer at the time of return according to the renewal agreement. In this case, the transaction server 200 may predict a second-hand price at a changed time of return, and divide the predicted second-hand price by the cash value per unit of the virtual asset at the time of purchase to recalculate the virtual asset.

Alternatively, when a non-return request for the commodity for which the return agreement is made is received from the buyer terminal 100, the transaction server 200 performs non-return processing for the commodity (S507 and S509). The transaction server 200 may burn the virtual asset issued at the time of purchase (S510).

In FIGS. 1 to 5, a case in which a buyer purchases a commodity having a return condition is mainly described, but the present invention is not limited thereto.

The commodity transaction system according to the embodiment of the present invention may also be applied even when a buyer leases or rents a commodity. In this case, the buyer terminal 100 and the transaction server 200 may perform a lease agreement or a rental agreement for a specific commodity that the buyer desires to lease or rent. In this case, a commodity to be transacted is not a purchase commodity but a lease commodity or a rental commodity, different from the commodity to be transacted described above, but is similar to the above as having a return condition. In other words, the buyer needs to select a contract period including the time of return in the lease agreement or rental agreement for a specific commodity.

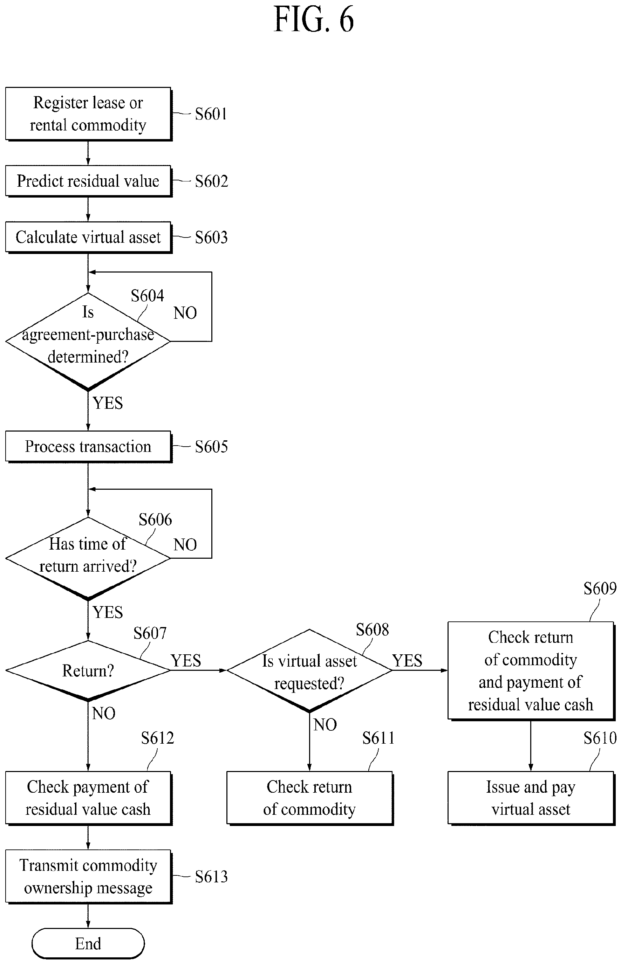

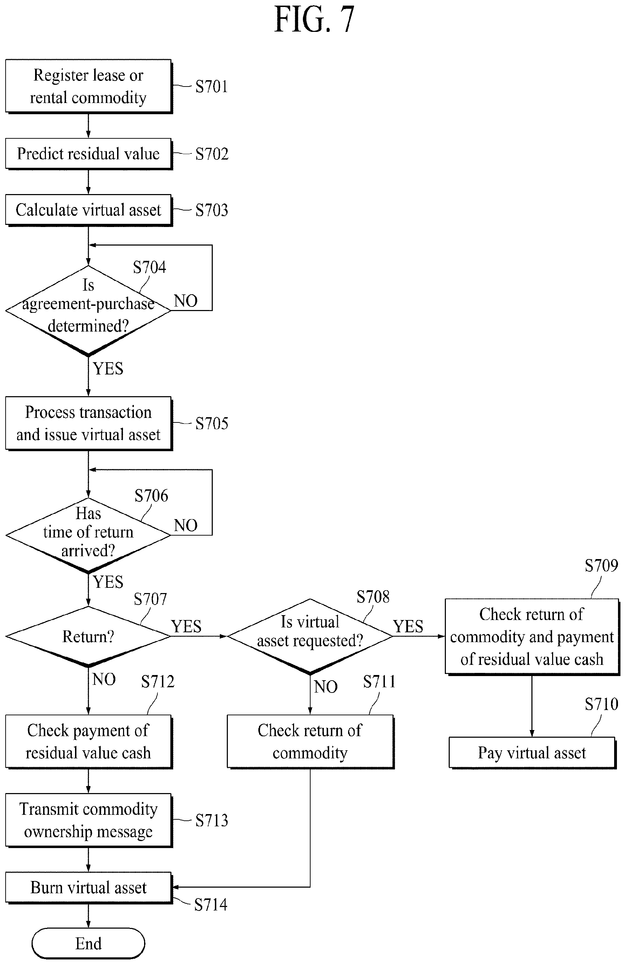

Hereinafter, a commodity transaction method when a buyer leases or rents a commodity will be described in detail with reference to FIGS. 6 and 7.

FIG. 6 is a flowchart showing a commodity transaction method according to another embodiment of the present invention. The commodity transaction method illustrated in FIG. 6 may be performed by the transaction server 200 illustrated in FIG. 1.

First, the transaction server 200 registers a plurality of lease or rental commodities (S601).

The transaction server 200, when a registration of a commodity is requested together with commodity-related information, stores the commodity-related information of the corresponding commodity. In this case, the commodity-related information may include a commodity name, a commodity price, a manufacturing country, a manufacturer, a manufacturing date, manufacturing ingredients, main specifications, and the like.

In an embodiment, the transaction server 200 may receive, from the seller terminal 300, a request to register a commodity. The transaction server 200 may store related information of the commodity requested by the seller terminal 300 to be registered such that the commodity-related information matches seller information in the database 270.

The transaction server 200 may, upon receiving a commodity list request from the buyer terminal 100, provide the buyer terminal 100 with a commodity list including at least one commodity among the plurality of stored commodities.

The transaction server 200, when at least one commodity in the commodity list is selected by the buyer as a commodity of interest, predicts a residual value of the commodity of interest and calculates a virtual asset corresponding to the predicted residual value (S602 and S603).

Specifically, the transaction server 200 may, when one commodity in the commodity list is selected by the buyer as a commodity of interest, provide the buyer terminal 100 with detailed information about the commodity of interest. The detailed information about the commodity may include commodity-related information and transaction-related information.

The commodity-related information may include a commodity name, a commodity price, a manufacturing country, a manufacturer, a manufacturing date, manufacturing ingredients, main specifications, and the like, and the transaction-related information may include predicted residual values for each contract period and virtual assets to be paid at a time of return for each contract period for the lease or rental commodity.

The transaction server 200 may predict the residual value for the lease or rental commodity through big data analysis. In this case, the transaction server 200 may predict the residual values for each contract period. The residual value may correspond to a second-hand price of the commodity at the end of the contract period.

In addition, the transaction server 200 may calculate the virtual asset based on the predicted residual value. Specifically, the transaction server 200 may calculate the virtual asset based on the predicted residual value and the cash value per unit of the virtual asset.

Here, the virtual asset is an asset that is traded only online without a real thing, and may include a virtual currency, such as cryptocurrency. Virtual assets may be settled in a virtual space, may be listed on a virtual asset exchange and traded, or may be traded at a designated virtual asset sales office. The virtual assets may fluctuate in the cash value per unit.

The transaction server 200 may calculate the virtual asset by dividing the predicted residual value by the current cash value per unit of the virtual asset. The transaction server 200 may calculate the virtual assets for each contract period.

The transaction server 200 may provide the predicted residual values for each contract period and the virtual assets for each contract period to the buyer through the buyer terminal 100. The buyer may select the contract period by referring to the predicted residual values for each contract period and the virtual assets for each contract period of the corresponding commodity. The transaction server 200, when a contract period and a request to lease or rent a commodity are received from the buyer terminal 100, processes a transaction for the commodity requested by the buyer to be leased or rented (S604 and S605).

The transaction server 200 may receive the contract period selected by the buyer from the buyer terminal 100, and determine the received contract period as a contract period of the corresponding lease or rental.

The transaction server 200 may, when a lease or rental for a specific commodity is requested from the buyer terminal 100, generate a return agreement including a time of return and a virtual assets to be paid to the buyer upon return, and process a transaction for the specific commodity. The transaction server 200 may receive, from the buyer terminal 100, delivery information including an address to which the specific commodity is to be delivered, and payment information about a lease amount or rental amount of the specific commodity to be paid regularly. The transaction server 200 may store transaction information in the database 270. In this case, the transaction information may include purchase commodity information, a contract period including a time of return, delivery information, payment information, and buyer information.

Meanwhile, the transaction server 200 may generate a return agreement including the time of return and the virtual asset to be paid to the buyer upon return. The transaction server 200 may calculate a virtual asset to be paid to the buyer upon return when the buyer leases or rents the commodity through the buyer terminal 100, for example, at the time when the return agreement for the commodity is made. The transaction server 200 may calculate the virtual asset to be paid to the buyer upon return based on the cash value per unit of the virtual asset at the time of leasing or renting the commodity. Specifically, the transaction server 200 may calculate the virtual asset to be paid to the buyer upon return by dividing the predicted residual value of the commodity at the time of return of the contract period by the cash value per unit of the virtual asset at the time of leasing or renting the commodity.

Alternatively, the transaction server 200 may determine a virtual asset corresponding to a residual value of a contract period selected by the buyer among the virtual assets calculated for each contract period, as the virtual asset to be paid to the buyer upon return.

Next, when the time of return arrives according to the return agreement, the transaction server 200 checks whether the buyer is to return the commodity (S606 and S607).

The transaction server 200 may check the time of return of the return agreement for each of the commodities leased or rented by the plurality of buyers through the information stored in the database 270. When the time of return of the return agreement is included within a predetermined period from the present, the transaction server 200 may request the buyer terminal 100 of the buyer who has leased or rented the corresponding commodity to confirm whether the commodity is to be returned.

The transaction server 200 may request the buyer terminal 100 to guide the time of return of the commodity for which the return agreement is made and to confirm whether the commodity is to be returned according to the return agreement. In an embodiment, the transaction server 200 may provide the buyer terminal 100 with the cash value of the virtual asset to be paid at the time of return in a case in which the buyer returns the commodity according to the return agreement. In this case, the cash value of the virtual asset to be paid at the time of return may be calculated by multiplying the virtual asset calculated or issued at the time of leasing or renting by the cash value per unit of the virtual asset at the time of return. In an embodiment, when the buyer returns the commodity according to the return agreement, the transaction server 200 may provide the buyer terminal 100 with the actual residual value of the commodity at the time of return.

Next, the transaction server 200, when a return request for the commodity for which the return agreement is made is received from the buyer terminal 100, checks whether the virtual asset is to be paid (S608). The transaction server 200, upon receiving a virtual asset payment request from the buyer terminal 100, performs return processing for the corresponding commodity. In this case, the transaction server 200 may request the buyer terminal 100 to return the commodity and pay cash corresponding to the residual value.

The transaction server 200, when the return of the commodity and the payment of cash corresponding to the residual value are confirmed, issues a virtual asset to be paid to the buyer who has returned the commodity and pays the issued virtual asset (S609 and S610).

The transaction server 200 may issue the virtual asset when the buyer returns the leased or rented commodity according to the return agreement. The transaction server 200 may issue the virtual asset calculated based on the cash value per unit of the virtual asset at the time of leasing or renting rather than the time of return, for example, when the return agreement is made. The transaction server 200 may issue the virtual asset calculated based on the predicted residual value of the commodity at the time of return of the contract period and the cash value per unit of the virtual asset at the time of leasing or renting. Specifically, the transaction server 200 may issue the virtual asset corresponding to a value obtained by dividing the predicted residual value of the commodity at the time of return of the contract period by the cash value per unit of the virtual asset at the time of leasing or renting.

The transaction server 200 may generate return agreement, which includes a virtual asset to be paid upon return, with the buyer when the buyer leases or rentals a commodity. In this case, the transaction server 200 may issue the virtual asset included in the return agreement made at the time of leasing or renting, and pay the issued virtual asset to the buyer.

Meanwhile, the transaction server 200 may, upon receiving a request for non-payment of a virtual asset is received from the buyer terminal 100, perform return processing for the corresponding commodity. In this case, the transaction server 200 may request only the return of the commodity from the buyer terminal 100. When the commodity return is confirmed, the transaction server 200 transmits a transaction completion message to the buyer terminal 100 (S611).

Alternatively, the transaction server, when a request for non-return of a commodity for which a return agreement is made is received from the buyer terminal 100, perform non-return processing for the commodity. Specifically, the transaction server 200 may request the buyer terminal 100 to pay cash corresponding to the residual value. The transaction server, upon confirming the payment of the cash corresponding to the residual value, transmits a commodity ownership message to the buyer terminal 100 (S612 and S613). The transaction server 200 may transmit, to the buyer terminal 100, a transaction completion message including the commodity ownership message informing that the buyer has the ownership of the commodity.

In FIG. 6, the virtual asset has been illustrated as being issued when the buyer returns the commodity, but the present invention is not limited thereto. Hereinafter, a commodity transaction method according to a modified embodiment will be described in detail with reference to FIG. 7.

Since operations S701 to S703 of FIG. 7 are substantially the same as operations S601 to S603 of FIG. 6, detailed descriptions thereof will be omitted.

The transaction server 200, upon receiving a contract period and a lease or rental request for a commodity from the buyer terminal 100, processes a transaction for the commodity requested by the buyer for leasing or rental, and issues a virtual asset (S704 and S705).

The transaction server 200 may receive the contract period selected by the buyer from the buyer terminal 100, and determine the received contract period as a contract period of the corresponding leasing or rental. In addition, the transaction server 200 may determine a virtual asset corresponding to a residual value of the determined contract period as the virtual asset to be paid to the buyer upon return.

The transaction server 200 may, when a lease or rental for a specific commodity is requested from the buyer terminal 100, generate a return agreement including a time of return and a virtual assets to be paid to the buyer upon return, and process a transaction for the specific commodity. The transaction server 200 may receive, from the buyer terminal 100, delivery information including an address to which the specific commodity is to be delivered, and payment information about a lease amount or rental amount of the specific commodity to be paid regularly. The transaction server 200 may store transaction information in the database 270. In this case, the transaction information may include purchase commodity information, a contract period including a time of return, delivery information, payment information, and buyer information.

Meanwhile, the transaction server 200 may generate a return agreement including the time of return and the virtual asset to be paid to the buyer upon return. The transaction server 200 may calculate a virtual asset to be paid to the buyer upon return when the buyer leases or rents the commodity through the buyer terminal 100, for example, at the time when the return agreement for the commodity is made. The transaction server 200 may calculate the virtual asset to be paid to the buyer upon return based on the cash value per unit of the virtual asset at the time of leasing or renting the commodity. Specifically, the transaction server 200 may calculate the virtual asset to be paid to the buyer upon return by dividing the predicted residual value of the commodity at the time of return of the contract period by the cash value per unit of the virtual asset at the time of leasing or renting the commodity.

Alternatively, the transaction server 200 may determine a virtual asset corresponding to a residual value of a contract period selected by the buyer among the virtual assets calculated for each contract period, as the virtual asset to be paid to the buyer upon return.

Then, the transaction server 200 may issue the calculated virtual asset.

Next, when the time of return arrives according to the return agreement, the transaction server 200 checks whether the buyer is to return the commodity (S706 and S707).

The transaction server 200 may check the time of return of the return agreement for each of the commodities leased or rented by the plurality of buyers through the information stored in the database 270. When the time of return of the return agreement is included within a predetermined period from the present, the transaction server 200 may request the buyer terminal 100 of the buyer who has leased or rented the corresponding commodity to confirm whether the commodity is to be returned.

The transaction server 200 may request the buyer terminal 100 to guide the time of return of the commodity for which the return agreement is made and to confirm whether the commodity is to be returned according to the return agreement. In an embodiment, the transaction server 200 may provide the buyer terminal 100 with the cash value of the virtual asset to be paid at the time of return in a case in which the buyer returns the commodity according to the return agreement. In this case, the cash value of the virtual asset to be paid at the time of return may be calculated by multiplying the virtual asset calculated or issued at the time of leasing or renting by the cash value per unit of the virtual asset at the time of return. In an embodiment, when the buyer returns the commodity according to the return agreement, the transaction server 200 may provide the buyer terminal 100 with the actual residual value of the commodity at the time of return.

Next, the transaction server 200, when a return request for the commodity for which the return agreement is made is received from the buyer terminal 100, checks whether the virtual asset is to be paid (S708). The transaction server 200 may, upon receiving a virtual asset payment request from the buyer terminal 100, perform return processing for the corresponding commodity. In this case, the transaction server 200 may request the buyer terminal 100 to return the commodity and the payment of cash corresponding to the residual value.

The transaction server 200, when the return of the commodity and the payment of cash corresponding to the residual value are confirmed, pays the virtual asset issued at the time of leasing or renting to the buyer who has returned the commodity (S709 and S710).

Meanwhile, the transaction server 200 may, upon receiving a request for non-payment of a virtual asset from the buyer terminal 100, performs return processing for the corresponding commodity. In this case, the transaction server 200 may request only the return of the commodity from the buyer terminal 100. When the return of the commodity is confirmed, the transaction server 200 transmits a transaction completion message to the buyer terminal 100 (S711).

Alternatively, the transaction server, when a request for non-return of a commodity for which a return agreement is made is received from the buyer terminal 100, performs non-return processing for the commodity. Specifically, the transaction server 200 may request the buyer terminal 100 to pay cash corresponding to the residual value. The transaction server, upon confirming payment of the cash corresponding to the residual value, transmits a commodity ownership message to the buyer terminal 100 (S712 and S713). The transaction server 200 may transmit, to the buyer terminal 100, a transaction completion message including the commodity ownership message informing that the buyer has the ownership of the commodity.

Then, the transaction server 200 may burn the virtual asset issued at the time of leasing or renting (S714).

A person having ordinary skill in the art should appreciate that other specific modifications can be easily made without departing from the technical spirit or essential features of the invention.

For example, the commodity transaction method shown in FIGS. 4 to 7 may be implemented in the form of a program, such as an application or an agent, and loaded on a medium capable of reading the corresponding program. When the commodity transaction method according to the present invention is implemented as a program, each operation shown in FIGS. 4 to 7 may be implemented as code, and code for implementing a specific function may be implemented as one program, or implemented in a plurality of programs in a distributed manner.

The above-described embodiments should be regarded as illustrative rather than limitative in all aspects. The scope of the present invention is not defined by the detailed description as set forth above but by the accompanying claims of the invention. It should also be understood that all changes or modifications derived from the definitions and scope of the claims and their equivalents fall within the scope of the invention.

## Claims

1. A method for transacting a commodity comprising:
predicting a second-hand price at a time of return for a commodity desired to be purchased by a buyer, calculating a virtual asset corresponding to the predicted second-hand price, when a purchase is determined by the buyer, generating a return agreement including the time of return and the calculated virtual asset, and processing a transaction for the commodity;
allowing the buyer to determine whether to return the purchased commodity at the time of return according to the return agreement; and
when it is determined to return the commodity at the time of return, paying the virtual asset included in the return agreement to the buyer.

2. The method of claim 1, wherein a cash value per unit of the virtual asset changes.

3. The method of claim 1, wherein the processing of the transaction for the commodity includes calculating the virtual asset of the return agreement based on the predicted second-hand price and a cash value per unit of the virtual asset at a time of purchase.

4. The method of claim 1, further comprising calculating a cash value of the virtual asset to be paid to the buyer at the time of return based on the virtual asset included in the return agreement and a cash value per unit of the virtual asset at the time of return, and providing the buyer with the calculated cash value of the virtual asset.

5. The method of claim 1, further comprising providing the buyer with an actual second-hand price of the commodity purchased by the buyer at the time of return.

6. The method of claim 1, wherein the allowing of the buyer to determine whether to return the purchased commodity at the time of return according to the return agreement includes receiving one of a return request, a non-return request, and a renewal agreement request for the commodity from the buyer.

7. The method of claim 6, wherein the paying of the virtual asset included in the return agreement to the buyer includes, in response to receiving the return request for the commodity from the buyer, issuing the virtual asset included in the return agreement and paying the issued virtual asset to the buyer.

8. The method of claim 6, further comprising, in response to receiving the renewal agreement request for the commodity from the buyer, predicting a second-hand price at a changed time of return and dividing the predicted second-hand price by a cash value per unit of the virtual asset at the time of purchase to recalculate the virtual asset, and making a return agreement including the changed time of return and the recalculated virtual asset.

9. A commodity transaction system comprising:
a transaction processing unit configured to, when a purchase of a commodity having a return condition is requested by a terminal of a buyer, process a transaction for the commodity;
a virtual asset issuing unit configured to predict a second-hand price of the commodity at a time of return, calculate a virtual asset corresponding to the predicted second-hand price, and issue the calculated virtual asset; and
a return agreement processing unit configured to, when the commodity is determined to be returned according to the return condition, pay the buyer the issued virtual asset.

10. The system of claim 9, wherein the virtual asset issuing unit is configured to, at a time of purchasing the commodity, predict a second-hand price of the commodity at a time of return of the commodity and calculate a virtual asset corresponding to the predicted second-hand price.

11. The system of claim 10, wherein a cash value per unit of the virtual asset changes, and
the virtual asset issuing unit is configured to calculate the virtual asset to be paid at the time of return of the commodity based on the predicted second-hand price and a cash value per unit of the virtual asset at the time of purchasing the commodity.

12. The system of claim 9, wherein the virtual asset issuing unit is configured to issue the calculated virtual asset at the time of returning the commodity.

13. The system of claim 9, wherein the virtual asset issuing unit is configured to issue the calculated virtual asset at the time of purchasing the commodity, and
the return agreement processing unit is configured to, when the commodity is determined to not be returned at the time of return, burn the issued virtual asset.

14. The system of claim 9, wherein the return agreement processing unit is configured to, when a return of the commodity is requested from the terminal of the buyer, determine the return of the commodity.

15. A commodity transaction method comprising:
predicting a residual value of a commodity desired to be leased or rented by a buyer at a time of return of the commodity, calculating a virtual asset corresponding to the predicted residual value, and when a lease or rental is determined by the buyer, making a return agreement including the time of return and the calculated virtual asset, and processing a transaction for the commodity;
allowing the buyer to determine whether to return the leased or rented commodity at the time of return according to the return agreement;
when it is determined to return the commodity at the time of return, determining whether to pay the virtual asset included in the return agreement; and
when it is determined to pay the virtual asset is determined, paying the virtual asset to the buyer.
